# EUROPEAN PATENT SPECIFICATION

(11) **EP 1 074 772 B1**
(45) Date of publication and mention of the grant of the patent: **27.10.2004**
(21) Application number: 99830505.6
(22) Date of filing: 04.08.1999
(51) Int. Cl.: F16K 35/06

(54) **Ball valve with key-operated lock**
Kugelventil mit schlüsselbetätigtes Schloss
Vanne à boisseau sphérique avec serrure actionnée par une clé

(43) Date of publication of application: 07.02.2001
(73) Proprietor: Famfer S.N.C. Di Riccardo Ferrero & C., 12060 Farigliano (CN) (IT)
(72) Inventor: Ferrero, Riccardo, 12060 Farigliano (CN) (IT)
(74) Representative: Robba, Pierpaolo

(56) References cited:
- FR-A- 2 637 041
- GB-A- 2 227 811
- GB-A- 2 293 432
- US-A- 5 058 622
- US-A- 5 884 510

## Description

The present invention refers to a valve provided with a key-operated locking device.

As known, stop valves of this kind are currently used in systems for circulating fluids, gasses and the like. In case of a defaulting user the valve is closed and a lead seal is applied to the valve itself in order to prevent its re-opening. This method however if often ineffective, in that it is very easy to remove the lead seal and open the valve.

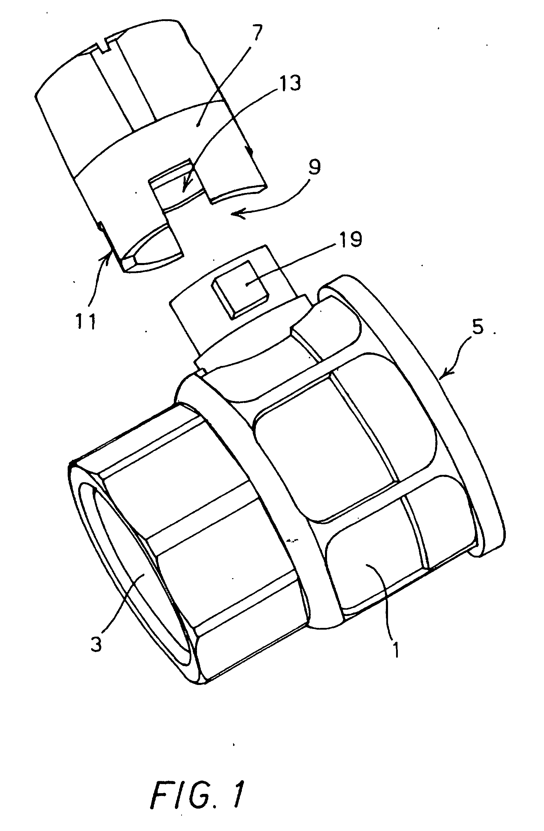

An example of a traditional valve is shown in figures 1 to 3. In figure 1 it is shown a ball valve body 1, comprising an inlet port 3 and an outlet port 5, wherebetween a spherical shutter is interposed, actuated, by means of a rotating shaft, by an actuating knob 7 or by a handle external to the valve body. The knob or grip 7 is fixed to the shutter shaft by means of a screw, so that it can be easily removed. On the body valve is present a stop ledge 19 which, when inserted into a first groove 9 provided in the knob 7, limits its rotation. The same stop ledge 19, when inserted in a second 11 or a third 13 groove, can prevent the rotation of the knob 7 locking the valve in an open or closed position.

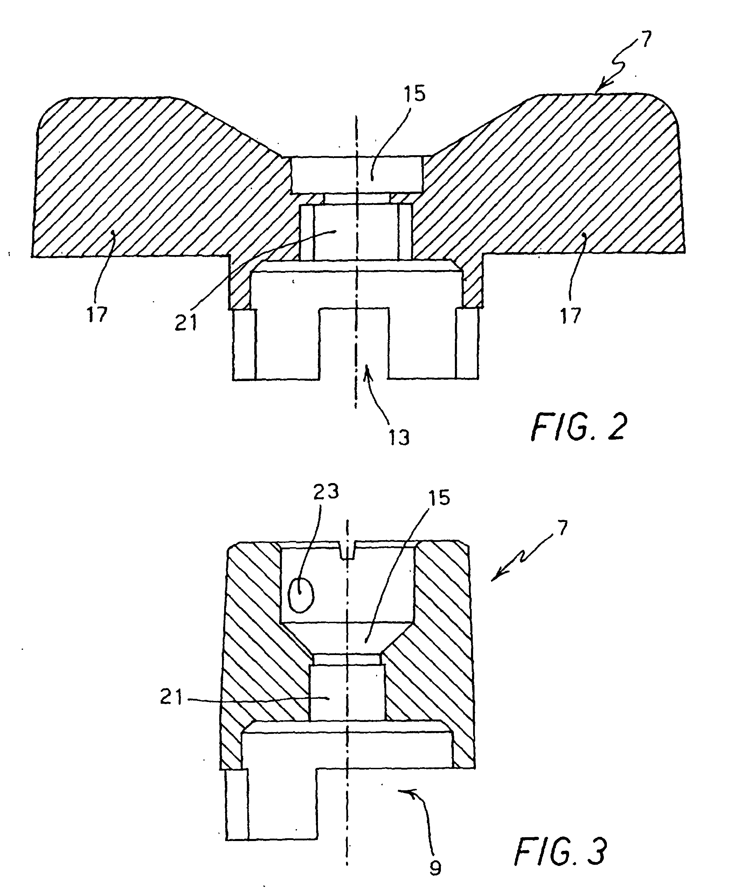

Figure 2 shows, in a sectional view, a butterfly handle 7 for actuating the valve of figure 1. An axial hole 21 houses the shutter shaft which is fixed to the handle by means of a screw which can be inserted from the top through an opening 15. The same screw allows to remove the handle 7 and to re-position it partially rotated, in order to insert the stop ledge 19 into the desired groove, for example the groove 13. Two wings 17 form the butterfly handgrip of the handle.

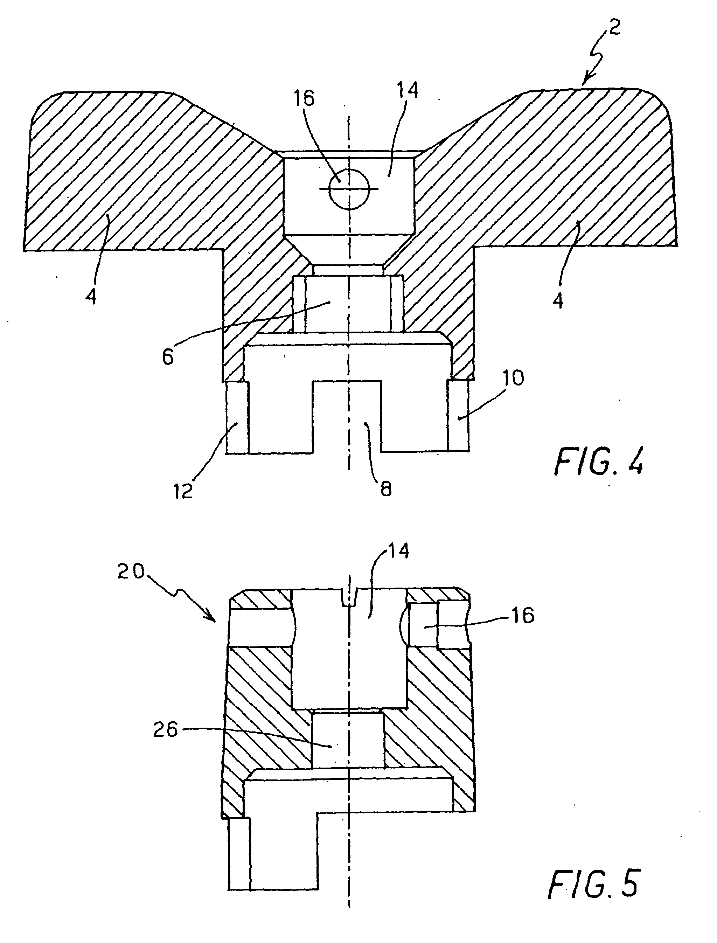

In figure 3 it is shown an actuating knob 7, suitable for the insertion on the valve body 1 of figure 1. An axial hole 21 allows the knob to be inserted on the shutter shaft and to fix it by means of a screw, not shown, in figure, which can be inserted through the opening 15. A through hole 23 allows the passage of a lead seal wire suitable for preventing the removal and repositioning of the knob on the valve.

Considering the facility with which a lead seal wire can be removed, recently have been developed valves provided with a real integrated lock. An example of valve having an integrated lock is disclosed in the patent application EP 0 355 457. Said document discloses a ball valve actuated by a butterfly handle in which is integrated a key-operated lock suitable for preventing the rotation. When the lock is in the "open" position the handle can be operated regularly, when, on the contrary, the lock is in the "closed" position the handle is locked and the valve cannot be operated until the lock is unlocked by means of the key.

The valve disclosed has however some drawbacks, in fact the presence of the lock influences considerably the production cost and increases consequently the final price of the valve. Considered the very low probability that a user becomes defaulting, the investment for the installation of this kind of valves in a distribution system, for example a municipal water system, it is often to much high in order to justify their installation. Moreover, if the lock is not used for several years, as happens very often, its operation could be irreparably compromised. Said valves in fact are often positioned in hostile environments (underground curb boxes, wet places, etc.), especially in municipal water systems. Another drawback it is therefore that, when the valve must be locked, it is necessary to be in possession of the key; in fact, after several years, the key can be no more available, can be lost or damaged.

GB 2 293 432 describes a tamperproof rotary plug valve comprising a handle keyed to a rotatable stem and having a pair of stops which are angularly spaced by 90° and cooperate with a lug on the valve housing to define open and closed conditions of the valve. The valve may be locked in the open or closed position by removing the handle and re-orientating it on the stem so that the lug is received in either of two notches. The handle is then secured on the stem by a nut which is covered to prevent access to the nut by a sealing cap.

US 5 884 510 discloses a bolt lock including a lock barrel having a central opening cylindrical about a central axis and extending between an open front end and a closed rear end. The lock barrel has bolt openings extending outwardly from opposite sides of the central opening adjacent the lock barrel rear end, with a pair of bolts received in opposite bolt openings. Each bolt has a head on one end, a leg on the other end with a rear side having a spring groove, and a front side with an axially extending shoulder. A lock plug in the barrel central opening has a pair of control lugs extending toward the barrel rear end. The lugs axially overlap with the bolt shoulders and the springs bias the bolts apart so that one shoulder engages one lug and the other shoulder engages the other lug.

FR 2 637 041 shows a tap of the type including a body having an inlet orifice intended to be connected to a fluid supply pipeline and an outlet orifice containing a movable shutter which can be actuated by a rod. The orifice of the body of the tap giving access to the actuating end of the rod for actuating the shutter is extended by a tubular sleeve secured to the body and capable of housing and retaining a lock when the latter is manipulated in the locking direction after insertion in the sleeve and of releasing it only after manipulating the lock in the unlocking direction, which manipulation is performed using a key associated with the lock.

US 5 058 622 discloses a valve lock assembly comprising a post member and a slide member, in which the post member is affixed to the valve stem of a valve and the side member can slide up and down around the post member, the slide member being so configured that it engages one or more of the stops on the valve to prevent rotation of the valve handle between the stops but, when slid upwardly, disengages from the stop and permits rotation of the valve handle.

GB 2 227 811 shows a shroud for a fluid-flow valve which, when fitted to such a valve, provides a lockshield arrangement, has a recess at its upper end the cross-section of which is hexagonal to allow a key of corresponding outer cross-section to engage and rotate the shroud, and engagement means, e.g. a square section aperture, to enable the shroud to engage, e.g. a square section part of, the stem of such a valve so that rotation of the shroud effects rotation of the valve stem, and hence opens or closes the valve, or changes the effective flow-way area of the valve. A shroud cover to prevent unauthorised rotation of the shroud is a snap fit on the shroud and rotatable relative thereto. A screw retains the shroud on the stem.

A first object of the present invention it is therefore to provide a valve, of the ball, cone or butterfly type, having a locking device, provided with a lock which can be inserted only when necessary, overcoming the drawbacks of the prior art.

Another object of the present invention is to provide a control element, a butterfly handle, a lever or a knob, provided with a locking device, easily matchable also with a body valve of the known type, and that is easy and cheap to manufacture.

These objects of the present invention are reached by a valve and a control element provided with a locking device, as defined in the enclosed claims.

According to the invention the valve with locking device comprises an handle, a lever or in general a similar control element, provided with a cavity suitable for containing a cylinder lock which prevents, when inserted, its removal and repositioning.

Thanks to the absence of the lock, which can be inserted only when necessary, the valve according to the invention shows better characteristics of economy and durability relative to the prior art but allows, thanks to the lock which can be inserted, to maintain high safety standards.

The aforesaid objects will become more evident from the detailed description of a valve according to the invention with particular reference to the attached drawings wherein:
Figure 1 is a perspective view of a ball valve realised according to the prior art;
figure 2 is a sectional view of a butterfly handle of a ball valve realised according to the prior art;
figure 3 is a sectional view of a knob of a ball valve realised according to the prior art;
figure 4 is a sectional view of a butterfly handle of a ball valve realised according to the present invention;
figure 5 is a sectional view of a knob of a ball valve realised according to the present invention;
figure 6 is a sectional view of a knob of a ball valve, wherein is inserted a lock, realised according to the present invention;
figure 7 is a sectional view of a knob of a ball valve, wherein is inserted a lock provided with a key, realised according to the present invention; and
figure 8 is a top view of a knob of a ball valve realised according to the present invention.

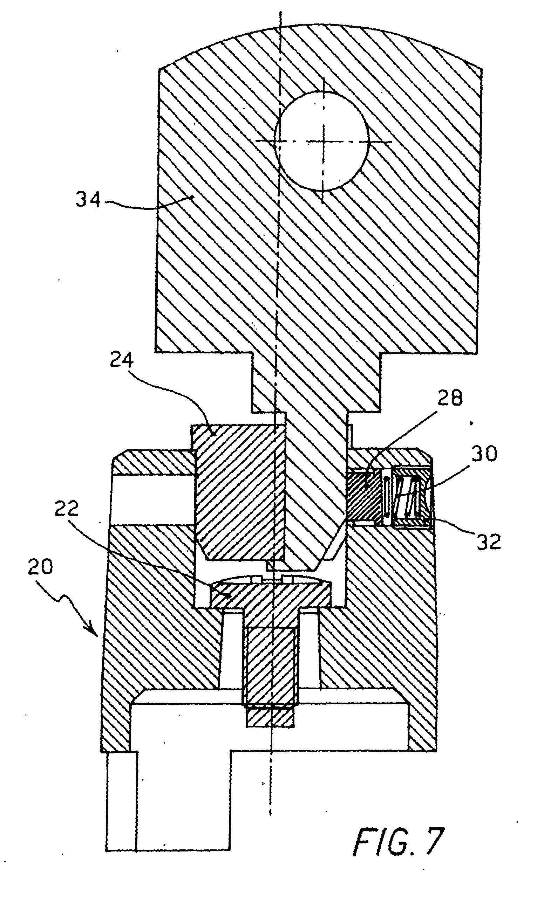

With reference to figure 4 it is shown a control element, in particular a butterfly handle 2, realised according to the present invention, matchable to a body valve as that previously shown in figure 1.

The handle 2, of the butterfly type, comprises two wings 4 which form the handgrip of the handle, a lower axial hole 6 suitable for housing the valve shutter shaft and an upper axial hole 14 through which a screw, not shown in figure, can be inserted in order to fix the handle on the shutter shaft. The upper axial hole 14 is a cylindrical seat suitable for housing a key-locking device, for example a cylinder lock, as will be explained hereinbelow. A through hole 16, substantially perpendicular to the handle axis, connects the seat 14 with the outside. Into the hole 16 is inserted a sliding plug which, pushed by an helical spring, penetrates into the seat 14 and prevents the unwanted removal of the key-locking device.

In the lower part of the handle are present some grooves 8, 10, 12 which allow, appropriately positioning the handle relative to the stop ledge 19 present on the valve body, to limit the rotation of the handle or to lock it in an open or close position. If the handle is positioned and fixed by the screw in a locked position, for example with the groove 8 coinciding with the stop ledge 19, and successively the cylinder lock is inserted into the seat 14, the valve cannot be re-opened except by opening the lock by means of the key and removing it from the seat 14.

Figure 5 shows, in a sectional view, a knob 20, realised according to the present invention, matchable with a traditional ball valve body, as for example that shown in figure 1. Structurally the knob 20 is very similar to the butterfly handle of figure 4 but is not provided with wings. The control knobs in fact are not operated manually but by means of a suitable tool, or spanner. In particular it is possible to see a lower axial hole 26 suitable for housing the valve shutter shaft, and the upper seat 14 which allows the insertion of the screw for fixing the knob to the shaft and, successively, for inserting the key-locking device.

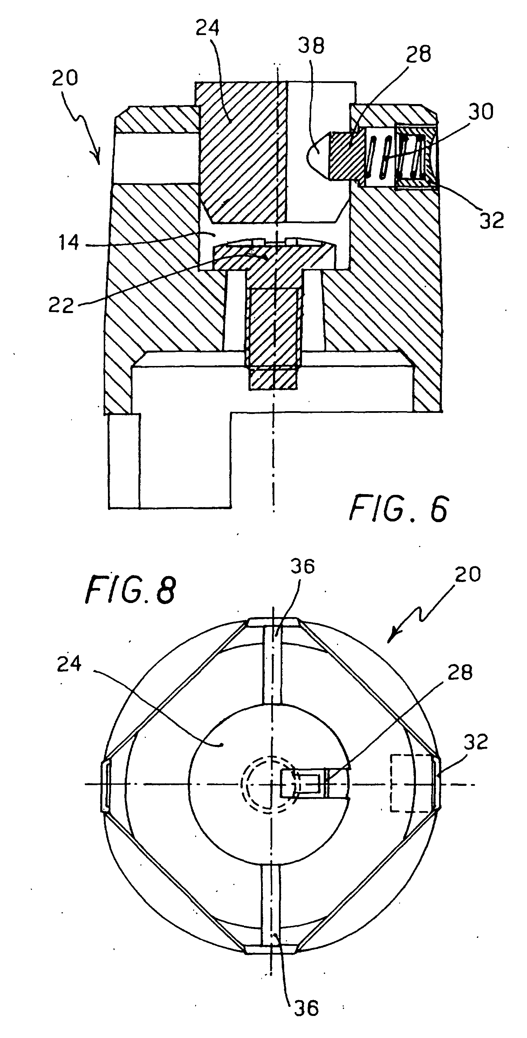

A through hole 16, shown here in section, houses a sliding plug, as will be described hereinbelow referring to figure 6.

In the lower part of the knob are provided some grooves that, engaging with the stop ledge 19 of the valve body, limit or prevent its rotation, according to the same principle used for the butterfly handle shown in figure 4.

Figure 6 shows a knob 20 having a screw 22, for fastening it to the ball shutter shaft, a cylinder lock 24 and, into the through hole 16, a sliding plug 28 pushed by an helical spring 30. A spring retainer 32 maintains the spring into the hole 16.

The sliding plug 28 is pushed by the spring 30 into a groove 38, or generally into a hole, provided in the cylinder lock 24 and prevents its removal. The cylinder lock 24 can therefore be snapped into the seat 14, but it cannot be removed without inserting the proper key. The spring retainer 32 can be screwed into the hole 16 or, for higher safety, can be pressed into the hole, caulking then the external edge to prevent its removal.

For higher safety it is possible to insert a second sliding plug 28, into a second through hole, preferably in a position opposite to the first hole 16, suitable for the insertion into a corresponding groove provided in the cylinder lock 24.

The second through hole, alternatively, can be used for the passage of a traditional lead seal wire, additionally or alternatively to the locking device 24.

Figure 7 shows a knob 20, provided with a cylinder lock 24, in which is inserted the corresponding key 34. As it is evident in the figure the key 34 pushes the sliding plug 28 into the hole 16 releasing the lock 24 from the seat 14. Contemporaneously the key 34 hooks the cylinder lock 24 allowing its extraction.

Alternatively the sliding plug 28 could not be present and the lock 24 could be provided with means for engaging with the hole 16 or with a similar groove into the seat 14.

When the lock is removed it is possible to reach the screw 22, remove the knob 20 or the handle 2 and reposition it as desired.

Figure 8 is a top view of the knob 20, provided with the cylinder lock 24. In particular are visible the sliding plug 28 clamping the lock 24, part of the spring retainer 32 and a transversal cut 36, provided on the upper surface of the knob, showing the flow direction, i.e. the valve open or closed. If the cut 36 is parallel to the valve axis, the valve is open; is it is transversal the valve is closed. In the handle or lever the status of the valve, open or close, is shown by the wings. The control knob could also be triangular or hexagonal.

Advantageously, the knob or the butterfly handle realised according to the present invention allows the realisation of a ball, cone or butterfly valve, or in general a valve wherein the opening and the closing are performed through the rotation, for example 90°, of a control knob, lockable by a key lock, which is cheaper then the prior art devices. The lock in fact, whose cost is not negligible, is inserted only when is effectively necessary, a condition that, practically, happens very rarely.

## Claims

1. Valve structure with locking device, comprising a valve body having at least an inlet port and an outlet port, wherebetween is interposed a rotary shutter member coupled to a control member (2, 20) operable from the outside of said body, said control member being matchable to said valve body at least in two different modes, a first mode which allows the rotation of said shutter and a second mode which prevents its rotation, said control member being provided with a seat (14) suitable for housing a locking device (24) which prevents to change the matching mode between said control member (2, 20) and said valve body, **characterised in that** said control member (2, 20) comprises a plug (28) sliding into a hole perpendicular to the axis of said seat, pushed by a spring (30) so that it enters into said seat (14), suitable for inserting into a groove or a hole (38) provided in said locking device (24) and locking it into said seat (14), thereby preventing the unwanted removal of said locking device (24).

2. Valve structure according to claim 1, wherein a key is used to operate said locking device (24).

3. Valve structure according to claim 1 or 2, wherein said control member (2, 20) is coupled to said shutter by means of a screw (22) and said locking device (24), when inserted in the corresponding seat (14), prevents the access to said screw (22).

4. Valve structure according to claim 3, wherein said seat (14) provided in said control member has a cylindrical shape and said locking device (24) is a key cylinder lock.

5. Valve structure according to claim 4, wherein said seat (14) is coaxial to the rotating shaft of said shutter.

6. Valve structure according to claim 2, wherein said control member (2, 20) comprises a second sliding plug, suitable for inserting into a groove provided in said key locking device.

7. Valve structure according to claim 6, wherein the insertion of the key (34) into said locking device (24) causes the movement of said sliding plug (28) or said sliding plugs away from said groove (38) or grooves and allows the removal of the locking device (24) from the corresponding seat (14).

8. Valve structure according to any of the preceding claims, wherein said control member is a butterfly handle (2) or a lever.

9. Valve structure according to any of the claims 1 to 7, wherein said control member is a control knob (20), triangular or hexagonal, operable through a suitable spanner.

10. Valve structure according to any of the preceding claims, wherein said valve is a ball, cone or butterfly valve, or however wherein the opening or the closing of the valve are actuated by a 90° rotation of a control member.

11. Control member (2, 20) for operating a rotating shutter in a valve body, matchable to said valve body in at least to different modes, a first mode which allows the rotation of said shutter and a second mode which prevents its rotation, said control member comprising a seat (14) suitable for housing a locking device (24) which prevents to change the matching mode between said control member (2, 20) and said valve body, **characterised in that** said control member (2, 20) comprises a plug (28) sliding into a hole perpendicular to the axis of said seat, pushed by a spring (30) so that it enters into said seat (14), suitable for inserting into a groove or a hole (38) provided in said locking device (24) and locking it into said seat (14), thereby preventing the unwanted removal of said locking device (24).

12. Control member (2, 20) according to claim 11, wherein said control member (2, 20) is coupled to said shutter by means of a screw (22) and said locking device (24), when inserted in the corresponding seat (14), prevents the access to said screw (22).

13. Control member (2, 20) according to claim 12, wherein said seat (14) provided in said control member has a cylindrical shape and said locking device (24) is a key cylinder lock.

## Patentansprüche

1. Ventilanordnung mit einer Verriegelungsvorrichtung, die einen Ventilkörper mit wenigstens einer Einlassöffnung und einer Auslassöffnung umfasst, zwischen denen ein Drehverschlusselement angeordnet ist, das mit einem Steuerelement (2, 20) gekoppelt ist, das von außerhalb des Körpers betätigbar ist, wobei das Steuerelement in wenigstens zwei verschiedenen Modi mit dem Ventilkörper zusammenpasst, wobei ein erster Modus die Drehung des Verschlusses ermöglicht und ein zweiter Modus seine Drehung verhindert, wobei das Steuerelement mit einem Sitz (14) versehen ist, in dem eine Verriegelungsvorrichtung (24) untergebracht werden kann, die eine Veränderung des Passmodus zwischen dem Steuerelement (2, 20) und dem Ventilkörper verhindert, **dadurch gekennzeichnet, dass** das Steuerelement (2, 20) einen Bolzen (28) umfasst, der in eine senkrecht zur Achse des Sitzes verlaufende Öffnung gleitet, durch eine Feder (30) so gedrückt wird, dass er in den Sitz (14) eintritt, in eine in der Verriegelungsvorrichtung (24) vorgesehene Nut oder Öffnung (38) eingesetzt werden kann und sie in dem Sitz (14) verriegelt kann, wodurch eine ungewünschte Entfernung der Verriegelungsvorrichtung (24) verhindert wird.

2. Ventilanordnung nach Anspruch 1, bei der ein Schlüssel zur Betätigung der Verriegelungsvorrichtung (24) verwendet wird.

3. Ventilanordnung nach Anspruch 1 oder 2, bei der das Steuerelement (2, 20) mit dem Verschluss über eine Schraube (22) gekoppelt ist, und die Verriegelungsvorrichtung (24) den Zugang zu der Schraube (22) verhindert, wenn sie in den entsprechenden Sitz (14) eingesetzt ist.

4. Ventilanordnung nach Anspruch 3, bei der der in dem Steuerelement vorgesehene Sitz (14) eine zylindrische Form aufweist und die Verriegelungsvorrichtung (24) eine Schlüsselzylinderverriegelung ist.

5. Ventilanordnung nach Anspruch 4, bei der der Sitz (14) koaxial zu der Drehwelle des Verschlusses ist.

6. Ventilanordnung nach Anspruch 2, bei der das Steuerelement (2, 20) einen zweiten Gleitbolzen umfasst, der in eine Nut eingesetzt werden kann, die in der Schlüsselverriegelungsvorrichtung vorgesehen ist.

7. Ventilanordnung nach Anspruch 6, bei der die Einführung des Schlüssels (34) in die Verriegelungsvorrichtung (24) eine Bewegung des Gleitbolzens (28) oder der Gleitbolzen weg von der Nut (38) oder den Nuten verursacht und die Entfernung der Verriegelungsvorrichtung aus dem entsprechenden Sitz (14) ermöglicht.

8. Ventilanordnung nach einem der vorhergehenden Ansprüche, bei der das Steuerelement ein Flügelhandgriff (2) oder ein Hebel ist.

9. Ventilanordnung nach einem der Ansprüche 1 bis 7, bei der das Steuerelement ein dreieckiger oder hexagonaler Steuerknopf (20) ist, der durch einen geeigneten Schraubenschlüssel betätigbar ist.

10. Ventilanordnung nach einem der vorhergehenden Ansprüche, bei der das Ventil ein Kugel-, ein Konus- oder ein Flügelventil oder dgl. ist, wobei die Öffnung oder die Schließung des Ventils durch eine 90°-Drehung eines Steuerelements bewirkt wird.

11. Steuerelement (2, 20) zur Betätigung eines Drehverschlusses in einem Ventilkörper, das in wenigstens zwei verschiedenen Modi mit dem Ventilkörper zusammenpasst, wobei ein erster Modus die Drehung des Verschlusses ermöglicht und ein zweiter Modus seine Drehung verhindert, wobei das Steuerelement einen Sitz (14) umfasst, in dem eine Verriegelungsvorrichtung (24) untergebracht werden kann, der eine Veränderung der Passmodi zwischen dem Steuerelement (2, 20) und dem Ventilkörper verhindert, **dadurch gekennzeichnet, dass** das Steuerelement (2, 20) einen Bolzen (28) umfasst, der in eine senkrecht zur Achse des Sitzes verlaufende Öffnung gleitet, durch eine Feder (30) so gedrückt wird, dass er in den Sitz (14) eintritt, in eine in der Verriegelungsvorrichtung (24) vorgesehene Nut oder Öffnung (38) eingesetzt werden kann und sie in dem Sitz (14) verriegeln kann, wodurch eine ungewünschte Entfernung der Verriegelungsvorrichtung (24) verhindert wird.

12. Steuerelement (2, 20) nach Anspruch 11, wobei das Steuerelement (2, 20) mittels einer Schraube (22) mit dem Verschluss gekoppelt ist, und die Verriegelungsvorrichtung (24) einen Zugang zu der Schraube (22) verhindert, wenn sie in den entsprechenden Sitz (14) eingesetzt ist.

13. Steuerelement (2, 20) nach Anspruch 12, bei dem der in dem Steuerelement vorgesehene Sitz (14) eine zylindrische Form hat und die Verriegelungsvorrichtung (24) eine Schlüsselzylinderverriegelung ist.

## Revendications

1. Structure de vanne avec dispositif de verrouillage, comprenant un corps de vanne ayant au moins un orifice d'entrée et un orifice de sortie entre lesquels est interposé un élément d'obturateur rotatif couplé à un élément de commande (2, 20) pouvant être actionné depuis l'extérieur dudit corps, ledit élément de commande pouvant se coupler avec ledit corps de vanne dans au moins deux modes différents, un premier mode qui autorise la rotation dudit obturateur et un deuxième mode qui interdit sa rotation, ledit élément de commande comportant un siège (14) approprié pour recevoir un dispositif de verrouillage (24) qui empêche de changer le mode de couplage entre ledit élément de commande (2, 20) et ledit corps de vanne, **caractérisée en ce que** ledit élément de commande (2, 20) comprend un pointeau (28), coulissant dans un trou perpendiculaire à l'axe dudit siège, poussé par un ressort (30) de façon à pénétrer dans ledit siège (14), approprié pour s'insérer dans une rainure ou dans un trou (38) formé dans ledit dispositif de verrouillage (24) et pour le bloquer dans ledit siège (14), empêchant ainsi un retrait non souhaité dudit dispositif de verrouillage (24).

2. Structure de vanne selon la revendication 1, dans laquelle une clé est utilisée pour manoeuvrer ledit dispositif de verrouillage (24).

3. Structure de vanne selon la revendication 1 ou 2, dans laquelle ledit élément de commande (2, 20) est couplé avec ledit obturateur au moyen d'une vis (22) et dans laquelle ledit dispositif de verrouillage (24), lorsqu'il est inséré dans le siège (14) correspondant, empêche d'accéder à ladite vis (22).

4. Structure de vanne selon la revendication 3, dans laquelle ledit siège (14) prévu dans ledit élément de commande a une forme cylindrique et ledit dispositif de verrouillage (24) est une serrure à barillet à clé.

5. Structure de vanne selon la revendication 4, dans laquelle ledit siège (14) est coaxial avec l'arbre rotatif dudit obturateur.

6. Structure de vanne selon la revendication 1 ou 2, dans laquelle ledit élément de commande (2, 20) comprend un deuxième pointeau coulissant approprié pour s'insérer dans une rainure formée dans ledit dispositif de verrouillage à clé.

7. Structure de vanne selon la revendication 6, dans laquelle l'insertion de la clé (34) dans ledit dispositif de verrouillage (24) provoque le déplacement dudit ou desdits pointeaux coulissants (28) hors de ladite ou desdites rainures (38) et permet de retirer le dispositif de verrouillage (24) du siège (14) correspondant.

8. Structure de vanne selon l'une quelconque des revendications précédentes, dans laquelle ledit élément de commande est une manette papillon (2) ou un levier.

9. Structure de vanne selon l'une quelconque des revendications 1 à 7, dans laquelle ledit élément de commande est un bouton de commande (20), triangulaire ou hexagonal, pouvant être manoeuvré à l'aide d'une clé appropriée.

10. Structure de vanne selon l'une quelconque des revendications précédentes, dans laquelle ladite vanne est une vanne à bille, une vanne conique ou une vanne papillon ou dans laquelle, toutefois, l'ouverture ou la fermeture de la vanne est actionnée par une rotation de 90° d'un élément de commande.

11. Élément de commande (2, 20) manoeuvrant un obturateur rotatif dans un corps de vanne, pouvant se coupler avec ledit corps de vanne dans au moins deux modes différents, un premier mode qui autorise la rotation dudit obturateur et un deuxième mode qui interdit sa rotation, ledit élément de commande comportant un siège (14) approprié pour recevoir un dispositif de verrouillage (24) qui empêche de changer le mode de couplage entre ledit élément de commande (2, 20) et ledit corps de vanne, **caractérisé en ce que** ledit élément de commande (2, 20) comprend un pointeau (28), coulissant dans un trou perpendiculaire à l'axe dudit siège, poussé par un ressort (30) de façon à pénétrer dans ledit siège (14), approprié pour s'insérer dans une rainure ou dans un trou (38) formé dans ledit dispositif de verrouillage (24) et pour le bloquer dans ledit siège (14), empêchant ainsi un retrait non souhaité dudit dispositif de verrouillage (24).

12. Élément de commande (2, 20) selon la revendication 11, dans lequel ledit élément de commande (2, 20) est couplé avec ledit obturateur au moyen d'une vis (22), et dans lequel ledit dispositif de verrouillage (24), lorsqu'il est inséré dans le siège (14) correspondant, empêche d'accéder à ladite vis (22).

13. Élément de commande (2, 20) selon la revendication 12, dans lequel ledit siège (14) prévu dans ledit élément de commande a une forme cylindrique et ledit dispositif de verrouillage (24) est une serrure à barillet à clé.
